# EUROPEAN PATENT APPLICATION

(11) **EP 4 456 278 A1**
(43) Date of publication of application: **30.10.2024**
(21) Application number: 22942298.5
(22) Date of filing: 06.07.2022
(51) Int. Cl.: H01M 50/15, H01M 50/159

(54) **END CAP ASSEMBLY, BATTERY CELL, BATTERY AND ELECTRIC DEVICE**

(30) Priority: 16.05.2022 CN 202221159230 U
(71) Applicant: Contemporary Amperex Technology Co., Limited, Ningde, Fujian 352100 (CN)
(72) Inventor: KE, Haibo, Ningde, Fujian 352100 (CN); LI, Quankun, Ningde, Fujian 352100 (CN); MAO, Guoan, Ningde, Fujian 352100 (CN); WANG, Peng, Ningde, Fujian 352100 (CN)
(74) Representative: Ran, Handong
(86) International application number: PCT/CN2022/104220
(87) International publication number: WO 2023/221267

(57) **Abstract**

Provided in the embodiments of the present application are an end cap assembly, a battery cell, a battery and an electric device. The end cap assembly comprises an end cap and a pressure relief member, wherein the end cap is provided with a recess portion sunk towards the interior of the battery cell, and the pressure relief member is arranged in the recess portion; and the distance between a top surface of the pressure relief member that deviates from the interior of the battery cell and the recess bottom of the recess portion is less than or equal to the depth of the recess portion. Therefore, the pressure relief member does not protrude from the top surface of the end cap, and the pressure relief member does not additionally occupy the space of the battery cell in a height direction. On the premise that the total height of the battery cell is not changed, the interior space of the battery cell using the end cap assembly is larger, so that more pole pieces can be accommodated in the battery cell, and thus the active substance capacity of the battery cell can be increased, thereby improving the energy density of the battery cell.

## Description

### CROSS-REFERENCE TO RELATED APPLICATIONS

This application refers to Chinese Patent Application No. 202221159230.9, filed on May 16, 2022 and entitled "END COVER ASSEMBLY, BATTERY CELL, BATTERY, AND ELECTRIC APPARATUS", which is incorporated herein by reference in its entirety.

### TECHNICAL FIELD

This application relates to the field of battery technologies, and in particular, to an end cover assembly, a battery cell, a battery, and an electric apparatus.

### BACKGROUND

Lithium-ion batteries have outstanding advantages such as high energy density, minimal environmental pollution, high power density, long service life, wide range of adaptability, and low self-discharge rate, making them one of the most widely used batteries in the world today and an important part of the development of new energy. With the continuous development of lithium-ion battery technology, higher requirements have been placed on the safety performance of lithium-ion batteries. The pressure relief component of lithium-ion batteries has an important impact on the safety performance of lithium-ion batteries. However, in some cases, the installation of the pressure relief component is not conducive to increasing the energy density of the battery.

### SUMMARY

Embodiments of this application aim to at least solve one of the technical problems existing in the prior art. For this purpose, an object of this application is to propose an end cover assembly, a battery cell, a battery, and an electric apparatus to enhance the energy density of the battery.

Embodiments of a first aspect of this application provide an end cover assembly, including an end cover and a pressure relief component, where the end cover is provided with a recessed groove section recessed toward the inside of the battery cell, the groove section is provided with a first through-hole at the groove bottom, the first through-hole is provided with a first protruding part at an edge, and the first protruding part protrudes from the groove bottom in a direction away from the inside of the battery cell; the pressure relief component is disposed within the groove section, and a top surface of the pressure relief component, facing away from the inside of the battery cell, has a distance to the groove bottom of the groove section that is less than or equal to a depth of the groove section, and the pressure relief component includes a pressure relief component body covering the first through-hole and a second protruding part connected to an edge of the pressure relief component body, where the second protruding part protrudes toward the groove bottom from the pressure relief component body, and the second protruding part is located between the first protruding part and an inner peripheral side surface of the groove section.

In the technical solutions of the embodiments of this application, the pressure relief component does not protrude from the top surface of the end cover, and thus does not occupy additional space in the height direction of the battery cell. With the use of this end cover assembly, the internal space of the battery cell is increased without changing the total height of the battery cell, thereby increasing the number of electrode plates that can be accommodated inside the battery cell, and thus enhancing the capacity of active materials of the battery cell, which can increase the energy density of the battery cell.

Moreover, the matching relationship between the first protruding part and the second protruding part can play a positioning role, which is conducive to accurately determining the installation position of the pressure relief component during the assembly process.

In some embodiments, the dimension by which the first protruding part protrudes from the groove bottom is a first dimension, and the dimension between the second protruding part and the groove bottom is a second dimension, the first dimension being greater than the second dimension. This configuration allows the second protruding part to be restricted between the first protruding part and the inner peripheral side surface of the groove section, facilitating the reduction of the possibility of the pressure relief component moving radially along the first through-hole.

In some embodiments, the difference between the first dimension and the second dimension is greater than 0 mm and less than or equal to 0.8 times the second dimension, or the difference between the first dimension and the second dimension is greater than 0 mm and less than or equal to 2 mm. This configuration ensures that the top surface of the first protruding part protrudes from the groove bottom of the groove section to an appropriate height compared to the second protruding part, allowing for an appropriate dimension by which the second protruding part extends into the space between the first protruding part and the inner peripheral side surface of the groove section.

In some embodiments, the end cover assembly further includes a sealing component, where at least part of the sealing component abuts between the groove bottom and the pressure relief component body to seal the pressure relief component body and part of the end cover constituting the groove section. The sealing component can seal the gap between the groove bottom of the groove section and the pressure relief component body, reducing the possibility of gas inside the battery cell escaping from the gap between the groove bottom of the groove section and the pressure relief component body.

In some embodiments, the second protruding part abuts against an outer peripheral side surface of the sealing component. Thus, at least part of the sealing component is located between the first protruding part and the second protruding part, and the second protruding part can provide a certain limiting effect on the sealing component, ensuring that the sealing component is retained between the first protruding part and the second protruding part.

In some embodiments, at least part of the sealing component is located between the first protruding part and the second protruding part, and this at least part of the sealing component has a first gap with the first protruding part in a direction parallel to the groove bottom. When the battery cell is charged, the structure of the positive electrode active substance changes, the electrolyte decomposes, generating heat, the sealing component expands as the temperature increases, and the first gap provides space for the deformation of the sealing component.

In some embodiments, a maximum dimension of the sealing component along a depth direction of the groove section is a third dimension, where the third dimension is greater than a dimension by which the second protruding part protrudes from the pressure relief component body, and the third dimension is also greater than a dimension by which the first protruding part protrudes from the groove bottom. This configuration provides a certain space in the thickness direction of the end cover between the first protruding part and the pressure relief component body, facilitating the installation of the second sealing part of the sealing component.

In some embodiments, the sealing component includes a first sealing part and a second sealing part, where the first sealing part abuts between the groove bottom and the pressure relief component body, and the second sealing part is connected to the first sealing part, and the second sealing part abuts between the first protruding part and the pressure relief component body. The sealing component can also seal the gap between the first protruding part and the pressure relief component body, reducing the possibility of gas inside the battery cell escaping from the gap between the first protruding part and the pressure relief component body.

In some embodiments, the second sealing part includes a second through-hole that communicates with the first through-hole, a hole wall of the second through-hole forms an inner peripheral side surface of the second sealing part, and the inner peripheral side surface of the second sealing part protrudes toward a centerline of the second through-hole from the first protruding part. When gas inside the battery cell flows from the first through-hole to the second through-hole, the gas pressure can further increase, thereby increasing the speed of the gas flow toward the pressure relief component body, further ensuring that the gas can break through the pressure relief component body, allowing the pressure relief component to perform its pressure relief function.

In some embodiments, the end cover assembly further includes a pressing component, where the pressing component is disposed on an outer side of the pressure relief component away from the groove bottom, and the pressing component is connected to the end cover to press the pressure relief component between the pressing component and the groove bottom. The pressing component presses on the pressure relief component, pressing the pressure relief component between the pressing component and the groove bottom of the groove section, thereby facilitating the stability of the installation of the pressure relief component in the end cover.

In some embodiments, a distance from a top surface of the pressing component, facing away from the pressure relief component, to the groove bottom is less than or equal to the depth of the groove section. With the pressing component pressing the pressure relief component, the pressing component of the battery cell does not protrude from the top surface of the end cover, and thus does not occupy additional space in the height direction of the battery cell, facilitating an increase in the energy density of the battery cell.

In some embodiments, the pressing component and the end cover are made of the same material. The pressing component and the end cover made of the same metal can be welded together, thereby effectively enhancing the connection strength between the pressing component and the end cover, facilitating enhancement of the overall structural strength of the end cover assembly.

In some embodiments, the end cover assembly further includes an insulating component, where at least part of the insulating component is disposed between the pressing component and the pressure relief component to insulate and isolate the pressing component from the pressure relief component, reducing the phenomenon of current conduction between the pressure relief component and the pressing component, thereby avoiding the occurrence of a short circuit in the battery cell.

In some embodiments, the insulating component includes a first insulating part and a second insulating part that are sequentially connected, where the first insulating part is disposed between part of the top surface of the pressure relief component and the pressing component, and the second insulating part covers an outer peripheral side surface of the pressure relief component. This design can achieve electrical insulation between the pressure relief component and the pressing component as well as the connecting part of the groove section.

In some embodiments, the end cover assembly further includes an isolation component, where the isolation component is disposed between the pressure relief component and the groove bottom to insulate and isolate the pressure relief component from the groove bottom, the isolation component can achieve electrical insulation between the pressure relief component and the bearing part of the groove section, achieving electrical insulation between the pressure relief component and the bearing part of the groove section.

In some embodiments, the isolation component is connected to the second insulating part, and the isolation component covers part of a bottom surface of the pressure relief component facing the groove bottom, making the isolation component and the insulating component an integral part, completely insulating and isolating the pressure relief component from the groove section.

In some embodiments, the isolation component and the insulating component are formed as an integral part by a one-piece molding process. Thus, not only can the assembly process of the isolation component and the insulating component be omitted, facilitating improvement of the assembly efficiency of the end cover assembly, but also, without increasing the cost, the structural strength of the insulating component can be effectively enhanced.

In some embodiments, the end cover assembly further includes a sealing component, where the sealing component abuts between the groove bottom and the pressure relief component, and the isolation component is tightly connected to the sealing component, making the isolation component and the sealing component an integral part, allowing the sealing component to have not only a sealing function but a function of insulating and isolating the pressure relief component from the groove bottom of the groove section.

In some embodiments, the isolation component abuts against a surface of the pressure relief component facing the groove bottom, and the isolation component has a second gap with the groove bottom, the second gap provides an assembly gap for the installation of the isolation component, facilitating the easy installation of the insulating component on the pressure relief component.

In some embodiments, the end cover includes an end cover body, and the groove section includes a bearing part and a connecting part, where a surface of the bearing part facing the outside of the battery cell forms the groove bottom, the connecting part is arranged around the bearing part, and the bearing part is connected to the end cover body through the connecting part.

In some embodiments, the end cover body, the connecting part, and the bearing part are formed as an integral part by a one-piece molding process, thus eliminating the assembly process of the groove section and the end cover body, enhancing the assembly efficiency. At the same time, without increasing the cost, the structural strength of the end cover can be enhanced.

In some embodiments, a material constituting the pressure relief component includes aluminum, and a material constituting the end cover includes steel. Steel end covers have high-temperature resistance characteristics, which can reduce the risk of high-temperature melting caused by explosions due to short circuits or overcharging phenomena in the battery cell, alleviating the problem of high-temperature melting of the battery cell. At the same time, aluminum pressure relief components have lower hardness, facilitating the processing to form notch grooves, and since the hardness of the end cover is greater than the hardness of the pressure relief component, when the internal pressure of the battery cell increases, the internal gas of the battery cell will preferentially impact the pressure relief component with lower hardness, allowing the pressure relief component to perform its pressure relief function, thereby facilitating the controllable exhaust direction of the battery cell.

Embodiments of a second aspect of this application provide a battery cell, which includes an electrode assembly, a housing, and the end cover assembly according to the embodiments described above, where the housing has an opening, the electrode assembly is accommodated within the housing, and the end cover assembly covers the opening.

Embodiments of a third aspect of this application provide a battery, which includes the battery cell provided by the embodiments of the second aspect of this application.

Embodiments of a fourth aspect of this application provide an electric apparatus, which includes the battery provided by the embodiments of the third aspect of this application.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts.
FIG. 1 is a schematic structural diagram of a vehicle according to some embodiments of this application;
FIG. 2 is a schematic structural exploded view of a battery according to some embodiments of this application;
FIG. 3 is a schematic structural exploded view of a battery cell according to some embodiments of this application;
FIG. 4 is a top view of an end cover assembly according to an embodiment of this application;
FIG. 5 is a sectional view along direction B-B of the end cover assembly shown in FIG. 4;
FIG. 6 is a locally enlarged view of position C in FIG. 5;
FIG. 7 is a locally enlarged view of position A in FIG. 3;
FIG. 8 is a sectional schematic diagram of another end cover assembly according to an embodiment of this application;
FIG. 9 is a locally enlarged view of position D in FIG. 8;
FIG. 10 is an exploded schematic diagram of a pressure relief component according to an embodiment of this application;
FIG. 11 is a sectional schematic diagram of yet another end cover assembly according to an embodiment of this application;
FIG. 12 is a locally enlarged view of position E in FIG. 11; and
FIG. 13 is a partial sectional schematic diagram of still yet another end cover assembly according to an embodiment of this application.

### DETAILED DESCRIPTION OF EMBODIMENTS

The following describes in detail embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the descriptions of the embodiments of this application, the technical terms "first", "second", and the like are merely intended to distinguish between different objects, and shall not be understood as any indication or implication of relative importance or any implicit indication of the number, specific sequence, or primary-secondary relationship of the technical features indicated. In the descriptions of the embodiments of this application, "multiple" means more than two, unless otherwise specifically defined.

In this specification, reference to "embodiment" means that specific features, structures or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the descriptions of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

In the descriptions of the embodiments of this application, the term "multiple" means more than two (inclusive). Similarly, "multiple groups" means more than two (inclusive) groups, and "multiple pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitation on the embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skill in the art can understand specific meanings of these terms in the embodiments of this application as suitable to specific situations.

Currently, lithium-ion batteries are widely used due to advantages such as high energy density, large power density, and low self-discharge coefficient. When lithium-ion batteries experience short circuits or overcharging, a large amount of gas is generated inside the battery cell, causing the internal pressure of the battery cell to rise sharply.

Researchers have found that in related technologies, some battery cells have pressure relief components on their end covers, which can release gas when the internal pressure of the battery reaches a preset threshold, thus releasing the internal pressure and reducing the risk of the battery cell catching fire or exploding. Moreover, researchers have also noticed that in the related technology of battery cells, a top surface of the pressure relief component facing away from the inside protrudes from the top surface of the end cover inside the battery cell. Since the pressure relief component protrudes from the end cover, it occupies the height space of the battery system assembly, thereby reducing the available capacity space of the cell, leading to a decrease in the number of electrode plates that can be stored inside the battery and a decrease in the capacity of active materials, which is not conducive to increasing the energy density of the battery.

To solve at least one of the above problems, embodiments of this application provide an end cover assembly, a battery cell, a battery, and an electric apparatus, where the end cover assembly has an end cover and a pressure relief component, the end cover is provided with a recessed groove section recessed toward the inside of the battery cell, the pressure relief component is disposed within the groove section, and a top surface of the pressure relief component, facing away from the inside of the battery cell, has a distance to the groove bottom of the groove section that is less than or equal to the depth of the groove section, such that the top surface of the pressure relief component facing away from the inside of the battery cell does not protrude from the top surface of the end cover. Thus, the pressure relief component does not occupy additional space in the height direction of the battery system assembly, thereby increasing the internal space available for storing electrode plates inside the battery, increasing the number of electrode plates, enhancing the capacity of active materials of the battery, and thus facilitating an increase in the spatial energy density of the battery.

The end cover assembly disclosed by the embodiments of this application may be used in an electric apparatus such as a vehicle, a ship, or an aircraft, but is not limited thereto. A power system of the electrical device can be composed using the end cover assembly, battery, and the like disclosed in this application, thereby facilitating an increase in the energy density of the battery.

An embodiment of this application provides an electric apparatus that uses a battery as a power source. The electric apparatus may be but is not limited to a mobile phone, a tablet, a laptop computer, an electric toy, an electric tool, an electric bicycle, an electric car, a ship, and a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, an electric apparatus according to an embodiment of this application being a vehicle 1000 is used as an example for description of the following embodiments.

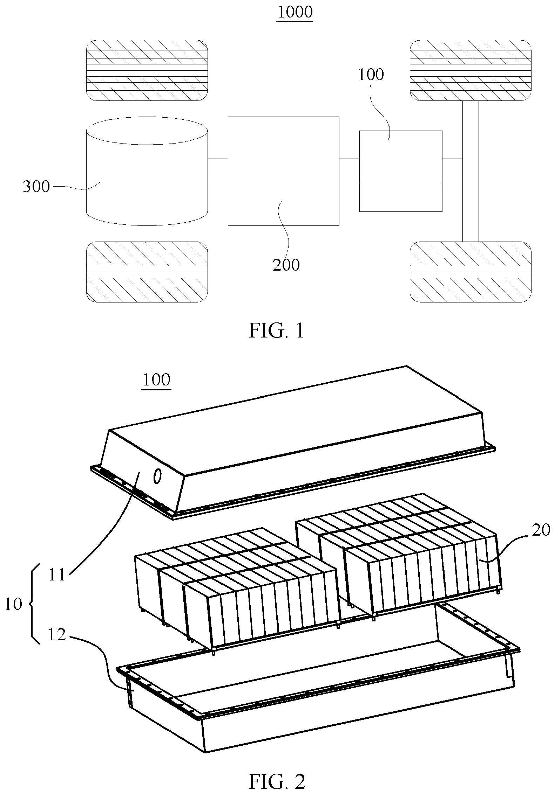

Refer to FIG. 1. FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, where the battery 100 may be arranged at the bottom, front, or rear of the vehicle 1000. The battery 100 may be configured to supply power to the vehicle 1000. For example, the battery 100 may be used as an operational power supply for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Refer to FIG. 2. FIG. 2 is an exploded view of a battery 100 according to some embodiments of this application. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first portion 11 and a second portion 12. The first portion 11 and the second portion 12 fit together such that the first portion 11 and the second portion 12 jointly define a space for accommodating the battery cell 20. The second portion 12 may be a hollow structure with one end open, and the first portion 11 may be a plate structure. The first portion 11 covers an open side of the second portion 12, so that the first portion 11 and the second portion 12 jointly define an accommodating space. Alternatively, the first portion 11 and the second portion 12 may each be a hollow structure with one side open, and the open side of the first portion 11 covers the open side of the second portion 12. Certainly, the box 10 formed by the first portion 11 and the second portion 12 may be of a variety of shapes, for example, cylinder or cuboid.

In the battery 100, the battery cell 20 is present in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10. Certainly, the battery 100 may alternatively be formed in a manner that a plurality of battery cells 20 are connected in series, parallel, or series-parallel first to form a battery module and then a plurality of battery modules are connected in series, parallel, or series-parallel to form an entirety which is accommodated in the box 10. The battery 100 may further include other structures. For example, the battery 100 may further include a busbar configured to implement electrical connection between the plurality of battery cells 20.

Each battery cell 20 may be a secondary battery or a primary battery, or may be a lithium-sulfur battery, a sodium-ion battery, or a magnesium-ion battery, without being limited thereto. The battery cell 20 may be cylindrical, flat, cuboid, or of other shapes. By packaging method, the battery cell 20 can be a cylindrical battery cell, prismatic battery cell, or pouch battery cell.

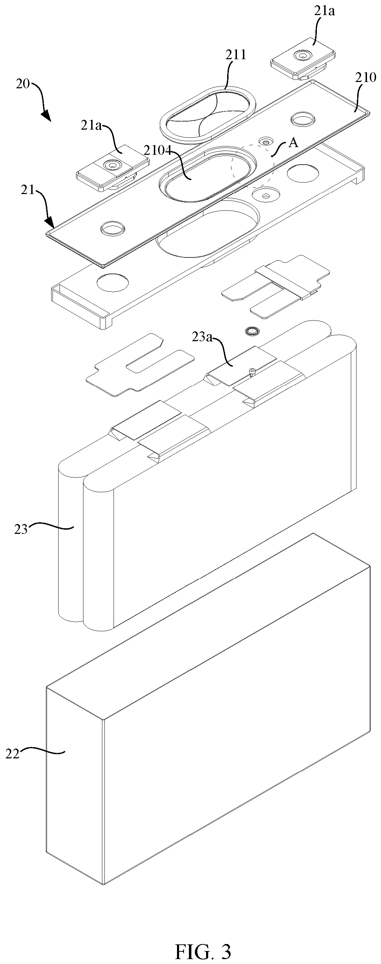

Refer to FIG. 3. FIG. 3 is a schematic structural exploded view of a battery cell 20 according to some embodiments of this application. The battery cell 20 refers to a smallest element constituting the battery 100. As shown in FIG. 3, the battery cell 20 includes an end cover assembly 21, a housing 22, an electrode assembly 23, and other functional components.

The housing 22 is an assembly configured to cooperate with the end cover assembly 21 to form an internal environment of the battery cell 20, where the formed internal environment can be used to accommodate the electrode assembly 23, an electrolyte, and other components. The housing 22 and the end cover assembly 21 may be independent components, an opening may be formed in the housing 22, and the end cover assembly 21 covers the opening to form the internal environment of the battery cell 20. The end cover assembly 21 and the housing 22 are not limited and may also be integrated. Specifically, the end cover assembly 21 and the housing 22 may form a shared connection surface before other components are disposed in the housing and then, the housing 22 is covered with the end cover assembly 21 when inside of the housing 22 needs to be enclosed. The housing 22 may be of various shapes and sizes, for example, a rectangular shape, a cylindrical shape, and a hexagonal prism shape. Specifically, the shape of the housing 22 may be determined according to a specific shape and size of the electrode assembly 23. The housing 22 may be made of various materials such as copper, iron, aluminum, stainless steel, aluminum alloy, and plastic. This is not particularly limited in the embodiments of this application.

The electrode assembly 23 is a component in which electrochemical reactions take place in the battery cell 20. The housing 22 may include one or more cell assemblies 23. The electrode assembly 23 is mainly formed by winding or stacking a positive electrode plate and a negative electrode plate, and a separator is generally provided between the positive electrode plate and the negative electrode plate. Parts of the positive electrode plate and the negative electrode plate that have active substances constitute a body portion of the electrode assembly 23, while parts of the positive electrode plate and the negative electrode plate that have no active substances separately constitute tabs 23a. A positive electrode tab and a negative electrode tab may both be located at one end of the main body or be located at two ends of the main body respectively. During charging and discharging of the battery, a positive electrode active substance and a negative electrode active substance react with the electrolyte, and the tabs 23a are connected to the electrode terminals to form a current loop.

The end cover assembly 21 refers to a component that covers an opening of the housing 22 to isolate an internal environment of the battery cell 20 from an external environment. Without limitation, a shape of the end cover assembly 21 is not limited and may be adapted to a shape of the housing 22.

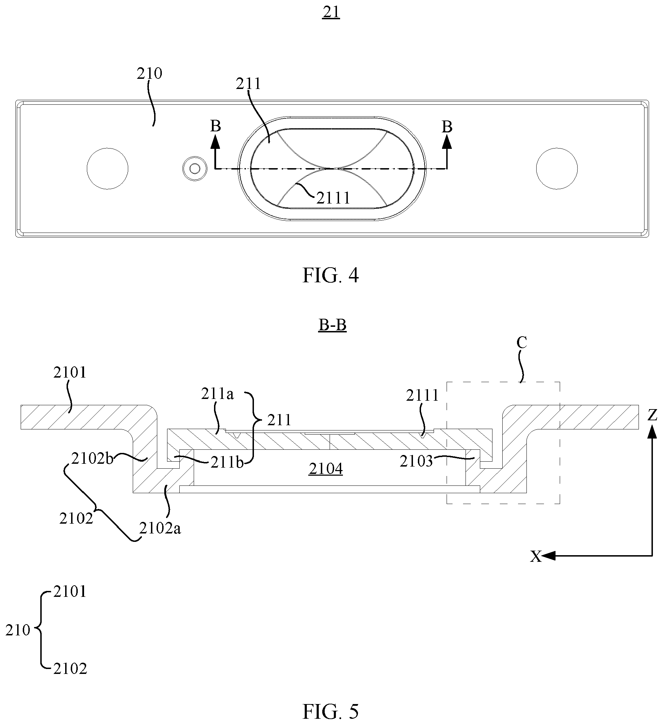

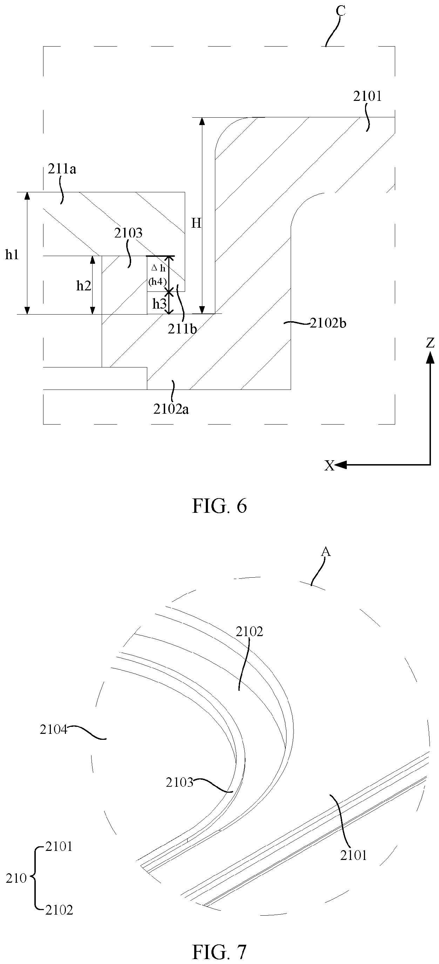

FIG. 4 is a top view of an end cover assembly 21 provided by the embodiments of this application, FIG. 5 is a sectional view along direction B-B of the end cover assembly shown in FIG. 4, FIG. 6 is a locally enlarged view of position C in FIG. 5. Referring to FIGs. 3 to 6, the end cover assembly 21 provided in this embodiment specifically includes an end cover 210 and a pressure relief component 211, where the end cover 210 is provided with a recessed groove section 2102 recessed toward the inside of the battery cell 20, the pressure relief component 211 is disposed within the groove section 2102, and a distance h1 between a top surface of the pressure relief component 211, facing away from the inside of the battery cell 20, and the groove bottom of the groove section 2102 is less than or equal to a depth H of the groove section 2102.

The end cover 210 covers an opening of the housing 22, where the end cover 210 cooperates with the housing 22. The end cover 210 may be made of a material with certain hardness and strength, thus the end cover assembly 21 has high structural strength, making the end cover assembly 21 not easily deformable when subjected to squeezing and collision, thereby also enhancing the safety performance of the battery cell 20. Continuing to refer to FIG. 3, the end cover 210 may also be provided with functional components such as electrode terminals 21a, where the electrode terminals 21a can be used for electrical connection with the electrode assembly 23, to output or input electrical energy of the battery cell 20.

The pressure relief component 211 is installed in the groove section 2102 of the end cover 210, where the pressure relief component 211 can perform a sealing function, the housing 22, the end cover 210, and the pressure relief component 211 together isolate the internal environment of the battery cell 20 from the external environment, that is, the internal space of the battery cell 20 forms a sealed space. When the battery 100 is overcharged, causing irreversible changes in the positive electrode active material and decomposition of the electrolyte, the battery 100 will generate a large amount of gas. This causes the internal pressure of the battery cell 20 to continuously rise, and the pressure relief component 211 can be used to export the internal gas of the battery 100 to the outside of the battery cell 20, thereby releasing the internal gas of the battery cell 20, which is beneficial for avoiding the internal gas of the battery cell 20 being too high and causing the battery 100 to explode. For example, in some feasible embodiments, the pressure relief component 211 can be a one-way valve, which only allows the internal gas of the battery cell 20 to flow out of the battery cell 20.

It can be understood that the shape and size of the groove section 2102 are adapted to the shape and size of the pressure relief component 211, allowing the pressure relief component 211 to be placed within the groove section 2102 while ensuring a small gap between the pressure relief component 211 and the groove walls of the groove section 2102. Along the thickness direction of the end cover 210 (shown in the Z direction in the drawings), the distance between the top surface of the pressure relief component 211 and the groove bottom of the groove section 2102 is h1, and the depth of the groove section 2102 is H, where the depth H of the groove section 2102 can be understood as the distance in the Z direction between the top surface of the end cover 210 and the groove bottom of the groove section 2102.

In one scenario, as shown in FIGs. 5 and 6, h1 may be less than H. In this example, compared to the top surface of the end cover 210, the top surface of the pressure relief component 211 is closer to the groove bottom of the groove section 2102. In other words, along the Z direction, the top surface of the pressure relief component 211 is lower than the top surface of the end cover 210.

In another scenario, h1 may be equal to H. In this example, the top surface of the pressure relief component 211 may be flush with the top surface of the end cover 210, that is, the top surface of the pressure relief component 211 and the top surface of the end cover 210 are coplanar.

In summary, with the design of the distance between the top surface of the pressure relief component 211 and the groove bottom of the groove section 2102 being less than or equal to the depth of the groove, the top surface of the pressure relief component 211 does not protrude from the top surface of the end cover 210.

In conclusion, when the battery cell 20 uses the end cover assembly 21 of this embodiment, the pressure relief component 211 of the battery cell 20 does not protrude from the top surface of the end cover 210, thus the pressure relief component 211 does not occupy additional space in the height direction of the battery cell 20. Thus, compared to the related technology where the pressure relief component 211 protrudes from the top surface of the end cover 210, without changing the total height of the battery cell 20, the internal space of the battery cell 20 using the end cover assembly 21 of this embodiment is larger, increasing the number of electrode plates that can be accommodated inside the battery cell 20, and enhancing the capacity of active materials of the battery cell 20, thus increasing the energy density of the battery cell 20.

It is worth noting that persons skilled in the art intend to think of reducing the height of the pressure relief component 211. Thus, although the internal space of the battery cell 20 can also be increased without changing the total height of the battery cell 20, the pressure relief component 211 protruding from the end cover 210 makes the pressure relief component 211 susceptible to impact and damage. In this embodiment, the pressure relief component 211 is set within the groove section 2102, making the pressure relief component 211 concealable within the groove section 2102, so that the groove section 2102 can provide a certain degree of protection for the pressure relief component 211, reducing the risk of the pressure relief component 211 being damaged by impact.

FIG. 7 is a locally enlarged view of position A in FIG. 3. Referring to FIGs. 5, 6, and 7, the groove bottom of the groove section 2102 is also provided with a first through-hole 2104, the first through-hole 2104 is provided with a first protruding part 2103 at an edge, and the first protruding part 2103 protrudes from the groove bottom of the groove section 2102 in a direction away from the inside of the battery cell 20; the pressure relief component 211 includes a pressure relief component body 211a covering the first through-hole 2104 and a second protruding part 211b connected to an edge of the pressure relief component body 211a. The second protruding part 211b protrudes toward the groove bottom of the groove section 2102 from the pressure relief component body 211a, and the second protruding part 211b is located between the first protruding part 2103 and an inner peripheral side surface of the groove section 2102.

The groove bottom of the groove section 2102 is provided with the first through-hole 2104, where the first through-hole 2104 is used for communication with the inside of the battery cell 20. The pressure relief component body 211a of the pressure relief component 211 is plate-shaped, covering the first through-hole 2104, and the pressure relief component 211 can meet the pressure relief needs of the battery cell 20, such that when the internal pressure of the battery cell 20 reaches a preset threshold, the first through-hole 2104 is opened, and the first through-hole 2104 communicates with the outside of the battery cell 20 via the groove section 2102, thereby releasing the pressure.

The shape of the first through-hole 2104 is not limited to the track shape shown in FIG. 3. It can also be circular, square, elliptical, or other gas shapes. The size of the first through-hole 2104 can be reasonably designed based on the model and size of the battery cell 20.

A first protruding part 2103 protrudes from groove bottom of the groove section 2102. The first protruding part 2103 is annular. The annular first protruding part 2103 is located at the edge of the first through-hole 2104 and surrounds the first through-hole 2104, forming an installation gap between the outer peripheral side surface of the annular first protruding part 2103 and the inner peripheral side surface of the groove section 2102.

When the battery cell 20 is in normal use, the pressure relief component body 211a seals the first through-hole 2104, keeping the inside of the battery cell 20 sealed. Additionally, the pressure relief component body 211a is provided with a notch groove 2111, the pressure relief component 211 is configured to crack along the notch groove 2111 when the internal pressure of the battery cell 20 reaches a preset threshold, so that the pressure relief component body 211a no longer blocks the first through-hole 2104, opening the first through-hole 2104, allowing the internal gas of the battery 100 to be discharged through the first through-hole 2104 and the groove section 2102 to the outside of the battery 100. Moreover, the edge of the pressure relief component body 211a is provided with a second protruding part 211b, which extends protruding toward the groove bottom of the groove section 2102. It is visible that the second protruding part 211b is also annular, and the annular second protruding part 211b extends into the installation gap. Thus, when the pressure relief component 211 is installed within the groove section 2102, the pressure relief component body 211a abuts against the first protruding part 2103, the second protruding part 211b surrounds the outside of the first protruding part 2103, and the second protruding part 211b is located between the first protruding part 2103 and the groove sidewall of the groove section 2102.

In this embodiment, the second protruding part 211b can be in gap fit with the installation gap. Alternatively, the second protruding part 211b can also be in interference fit with the installation gap. In this case, the second protruding part 211b tightly fits both the outer peripheral side surface of the first protruding part 2103 and the inner peripheral side surface of the groove section 2102. The second protruding part 211b being in interference fit with the installation gap can enhance the reliability of the connection between the pressure relief component 211 and the end cover 210.

The first protruding part 2103 and the groove section 2102 can be formed as an integral part by a one-piece molding process, thereby eliminating the assembly process of the first protruding part 2103 and the groove section 2102, and without increasing costs, effectively enhancing the strength of the groove section 2102. Similarly, the second protruding part 211b and the pressure relief component body 211a can also be formed as an integral part by a one-piece molding process, thereby eliminating the assembly process of the second protruding part 211b and the pressure relief component body 211a, and without increasing costs, effectively enhancing the strength of the pressure relief component 211.

The matching relationship between the first protruding part 2103 and the second protruding part 211b can serve a positioning function, conducive to determining the mounting positions of the pressure relief component 211 during the assembly process, and restrict the position of the second protruding part 211b, facilitating the reduction of the possibility of the pressure relief component 211 moving radially along the first through-hole 2104 (shown in the X direction in FIGs. 5 and 6).

The dimension by which the first protruding part 2103 protrudes from the groove bottom of the groove section 2102 is a first dimension h2, and the dimension between the second protruding part 211b and the groove bottom of the groove section 2102 is a second dimension h3, the first dimension h2 being greater than the second dimension h3.

Specifically, the dimension h2 by which the first protruding part 2103 protrudes from the groove bottom is the dimension along the Z direction from the surface of the first protruding part 2103 facing away from the inside of the battery cell 20 to the groove bottom of the groove section 2102. The design of h2 being greater than h3 allows the surface of the first protruding part 2103 facing away from the inside of the battery cell 20 to be higher than the surface of the second protruding part 211b facing the groove bottom of the groove section 2102.

This configuration is beneficial in ensuring that the second protruding part 211b can extend into the installation gap rather than being higher than the first protruding part 2103, thereby allowing the second protruding part 211b to be restricted between the first protruding part 2103 and the inner peripheral side surface of the groove section 2102, facilitating the reduction of the possibility of the pressure relief component 211 moving radially along the first through-hole 2104 (that is, direction X). Moreover, the internal gas of the battery cell 20 needs to bypass the first protruding part 2103 before spilling out between the first protruding part 2103 and the second protruding part 211b, thus the path for the gas to spill out is long, facilitating the reduction of the possibility of gas spilling out from between the pressure relief component 211 and the end cover 210.

The difference between the first dimension h2 and the second dimension h3 is greater than 0 millimeters (mm) and less than or equal to 0.8 times the first dimension, or the difference between the first dimension h2 and the second dimension h3 is greater than 0 mm and less than or equal to 2 mm. Referring to the description above that h2 is greater than h3, it can be known that the difference between the first dimension h2 and the second dimension h3 is Δh, where Δh=h2-h3, and 0 mm < Δh≤0.8*h2, or 0 mm < Δh≤2 mm.

It is worth noting that the dimension by which the second protruding part 211b protrudes from the pressure relief component body 211a is h4, in the example shown in FIG. 6 where the pressure relief component body 211a directly abuts against the first protruding part 2103, the difference Δh between the first dimension h2 and the second dimension h3 is the dimension h4 by which the second protruding part 211b protrudes from the pressure relief component body 211a. In this case, the height h4 of the second protruding part 211b, is less than or equal to 0.8*h2 or 2 mm.

Taking 0 mm<Δh≤0.8*h2 as an example, in this example, the maximum difference Δh between the first dimension h2 and the second dimension h3 may be 0.8*h2, that is, the maximum height h4 of the second protruding part 211b may be 0.8*h2. In this case, the top surface of the first protruding part 2103 is at most 0.8 times the first dimension h2 higher than the surface of the second protruding part 211b facing the groove bottom of the groove section 2102. For example, when the dimension by which the first protruding part 2103 protrudes from the groove bottom of the groove section 2102 is 1 mm, the height h4 of the second protruding part 211b may be 0.2 mm, and the second dimension h3 correspondingly is 0.8 mm; or, the height h4 of the second protruding part 211b may be 0.4 mm, and the second dimension h3 correspondingly is 0.6 mm; or the height h4 of the second protruding part 211b may be 0.8 mm, and the second dimension h3 correspondingly is 0.2 mm.

It should also be noted that in this embodiment, h3 is at least 0.2*h2. It is apparent that h3 is not 0 mm, and thus the second protruding part 211b does not contact the groove bottom of the groove section 2102, and there is a certain distance between the two.

Taking 0 mm<Δh≤2 mm as an example, in this example, the maximum difference Δh between the first dimension h2 and the second dimension h3 may be 2 mm. Since h4 in this embodiment is equal to Δh, h4 can be up to 2 mm. For example, the height h4 of the second protruding part 211b may be 0.5 mm, 1 mm, 1.5 mm, or 2 mm, and is not limited in this embodiment.

It should also be noted that in this embodiment, h3 may be 0 mm. In this case, the second protruding part 211b contacts the groove bottom of the groove section 2102, and the distance by which the first protruding part 2103 protrudes from the groove bottom of the groove section 2102 and the height of the second protruding part 211b are the same. In this example, the first dimension h2 may be up to 2 mm. Alternatively, in other embodiments, as shown in FIG. 6, h3 may be also greater than 0 mm. In this case, there is a certain distance between the second protruding part 211b and the groove bottom of the groove section 2102.

Exemplarily, in one possible implementation, the difference Δh between the first dimension h2 and the second dimension h3 may specifically be set to 0.05 mm, that is, the top surface of the first protruding part 2103 is 0.05 mm higher than the side of the second protruding part 211b facing the groove bottom of the groove section 2102.

As the difference Δh between the first dimension h2 and the second dimension h3 is set between 0 mm and 0.8*h2 or between 0 mm and 2 mm, the top surface of the first protruding part 2103 protrudes from the surface of the second protruding part 211b facing the groove bottom of the groove section 2102 to an appropriate height, allowing for an appropriate dimension by which the second protruding part 211b extends into the installation gap, allowing the second protruding part 211b to be restricted between the first protruding part 2103 and the inner peripheral side surface of the groove section 2102, and ensuring that the pressure relief component 211 is not too far from the groove bottom of the groove section 2102.

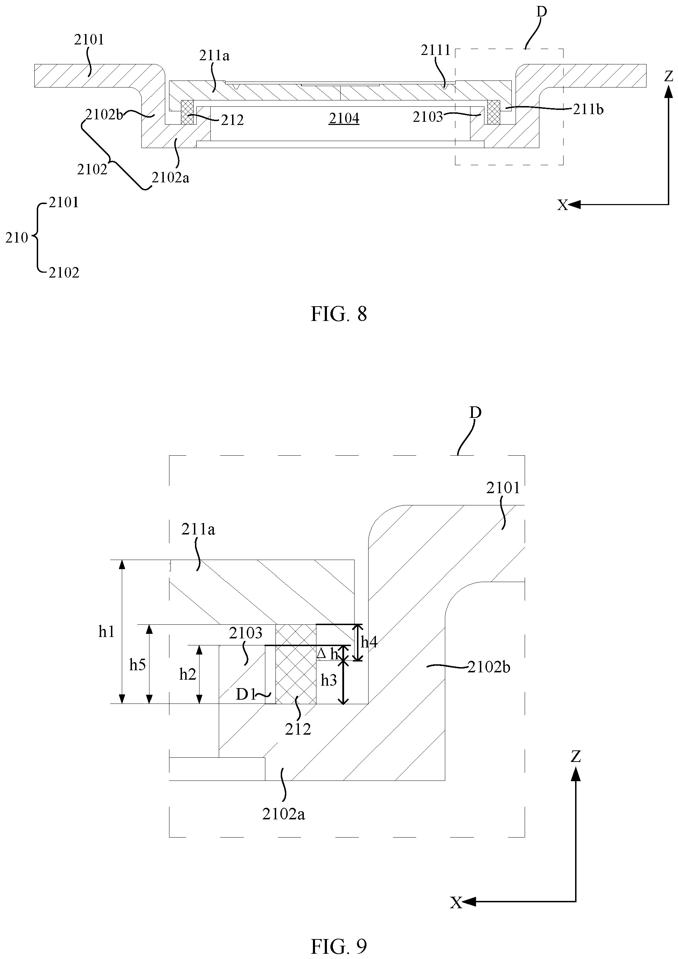

FIG. 8 is a sectional schematic diagram of another end cover assembly 21 provided by the embodiments of this application, FIG. 9 is a locally enlarged view of position D in FIG. 8, and

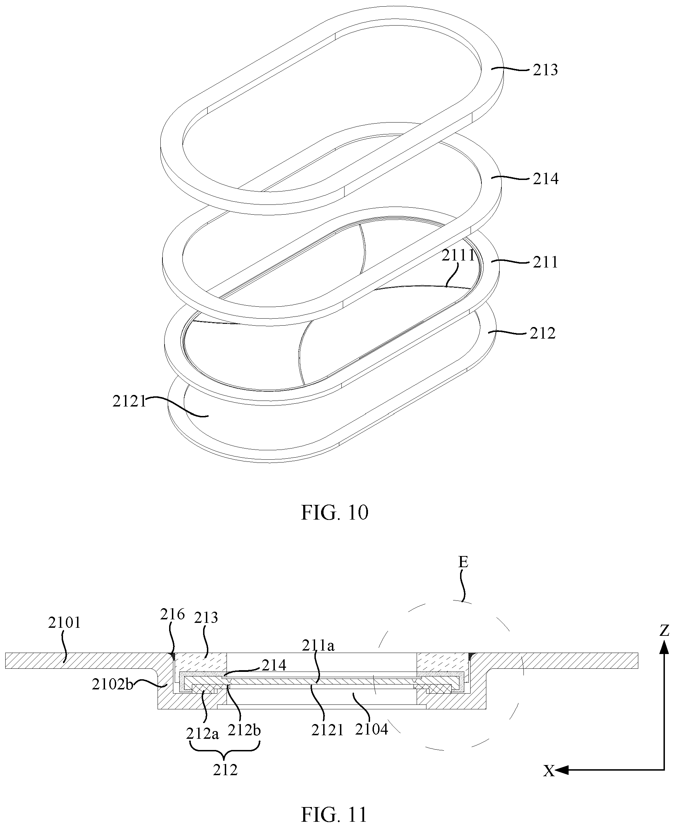

FIG. 10 is an exploded schematic diagram of the pressure relief component 211 provided by the embodiments of this application. Referring to FIGs. 8 to 10, the end cover assembly 21 also includes a sealing component 212, where at least part of the sealing component 212 abuts between the groove bottom of the groove section 2102 and the pressure relief component body 211a, to seal the pressure relief component body 211a and part of the end cover 210 constituting the groove section 2102.

At least part of the sealing component 212 abutting between the groove bottom of the groove section 2102 and the pressure relief component body 211a should be understood in a broad sense. Here, in one implementation, it can be understood that the entire sealing component 212 is disposed between the groove bottom of the groove section 2102 and the pressure relief component body 211a. As shown in FIGs. 8 and 9, the sealing component 212 is annular, for example, a sealing ring, and the annular sealing component 212 surrounds the outside of the first protruding part 2103, and does not block the communication of the first through-hole 2104 with the outside of the battery cell 20. Certainly, in other implementations, it can also be understood that only part of the sealing component 212 is disposed between the groove bottom of the groove section 2102 and the pressure relief component body 211a, specifically refer to the following FIGs. 11, 12, and 13.

Exemplarily, the material of the sealing component 212 may be rubber, silicone, plastic, or the like. As at least part of the sealing component 212 is designed to abut between the groove bottom of the groove section 2102 and the pressure relief component body 211a, the sealing component 212 can seal the gap between the groove bottom of the groove section 2102 and the pressure relief component body 211a, thereby reducing the possibility of gas inside the battery cell 20 escaping from the gap between the groove bottom of the groove section 2102 and the pressure relief component body 211a, reducing the possibility of failure of the pressure relief component 211, and facilitating the enhancement of the use safety of the battery cell 20 using the end cover assembly 21.

Continuing to refer to FIGs. 8 and 9, the second protruding part 211b abuts against the outer peripheral side surface of the sealing component 212. From the content described above, it can be known that at least part of the sealing component 212 abuts against the groove bottom of the groove section 2102 and the pressure relief component body 211a, and the second protruding part 211b is connected to the edge of the pressure relief component body 211a. Thus, at least part of the sealing component 212 is located between the first protruding part 2103 and the second protruding part 211b. Moreover, in this embodiment, the second protruding part 211b also contacts the outer peripheral side surface of the sealing component 212, that is, along the radial direction of the first through-hole 2104 (that is, the X direction), there is no gap between the second protruding part 211b and the outer peripheral side surface of the sealing component 212.

With this configuration, the second protruding part 211b can abut against the sealing component 212, allowing at least part of the sealing component 212 to be located between the first protruding part 2103 and the second protruding part 211b, and the second protruding part 211b can provide a certain limiting effect on the sealing component 212, ensuring that the sealing component 212 can be retained between the first protruding part 2103 and the second protruding part 211b.

At least part of the sealing component 212 is located between the first protruding part 2103 and the second protruding part 211b, and this at least part of the sealing component 212 has a first gap D1 with the first protruding part 2103 in a direction parallel to the groove bottom of the groove section 2102.

In other words, the sealing component 212 does not abut against the outer peripheral side surface of the first protruding part 2103. In the implementation where the second protruding part 211b abuts against the outer peripheral side surface of the sealing component 212, the sealing component 212 in this embodiment only fits with the inner peripheral side surface of the second protruding part 211b, and does not fit with the outer peripheral side surface of the first protruding part 2103.

As at least part of the sealing component 212 is designed to have a first gap D1 with the first protruding part 2103 in the X direction, a certain distance is present between at least part of the sealing component 212 and the outer peripheral side surface of the first protruding part 2103. Thus, firstly, it is possible to easily install part of the sealing component 212 between the first protruding part 2103 and the second protruding part 211b without the need for installation tools, and secondly, when the battery cell 20 is charged, the structure of the positive electrode active substance changes, the electrolyte decomposes, generating heat, the sealing component 212 expands as the temperature increases, and the first gap D1 provides space for the deformation of the sealing component 212, to avoid the expanded sealing component 212 from topping the first protruding part 2103 and the second protruding part 211b.

The maximum dimension of the sealing component 212 along the depth direction of the groove section 2102 is a third dimension h5, where the third dimension h5 is greater than the dimension h4 by which the second protruding part 211b protrudes from the pressure relief component body 211a, and the third dimension h5 is also greater than the dimension h2 by which the first protruding part 2103 protrudes from the groove bottom.

As h5 is designed to be greater than h4, there is a distance between the second protruding part 211b and the groove bottom of the groove section 2102, the second protruding part 211b does not contact the groove bottom of the groove section 2102. In addition, the second dimension h3 is greater than 0. And as h5 is designed to be greater than the first dimension h2, the pressure relief component body 211a is located above the first protruding part 2103 and does not directly contact the first protruding part 2103, that is, along the Z direction, there is a certain space between the pressure relief component body 211a and the first protruding part 2103.

In FIGs. 8 and 9, when the entire sealing component 212 abuts between the groove bottom of the groove section 2102 and the pressure relief component body 211a, the maximum dimension h5 of the sealing component 212 is the dimension of the entire sealing component 212 along the Z direction. In this case, the pressure relief component body 211a, the sealing component 212, and the groove bottom of the groove section 2102 together enclose an enclosed space, with the first protruding part 2103 located within this enclosed space.

As the maximum dimension h5 of the sealing component 212 along the depth direction of the groove section 2102 is designed to be greater than the first dimension h2 and the dimension h4 by which the second protruding part 211b protrudes from the pressure relief component body 211a, there is a certain space between the first protruding part 2103 and the pressure relief component body 211a in the Z direction, facilitating the installation of the second sealing part 212b described below, providing a certain space in the Z direction between the second protruding part 211b and the groove bottom of the groove section 2102, and facilitating the installation of the isolation component 215 described below.

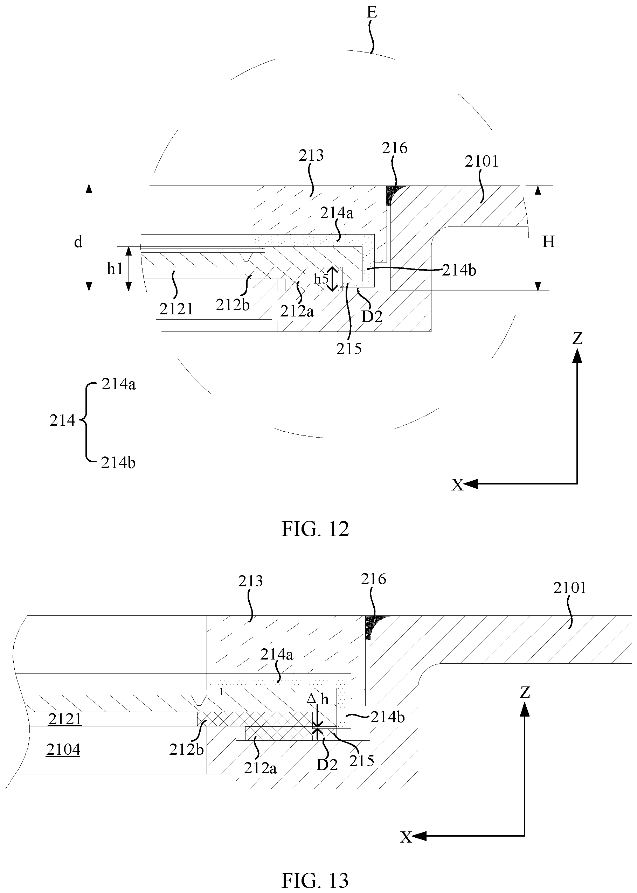

FIG. 11 is a sectional schematic diagram of yet another end cover assembly 21 provided by the embodiments of this application, FIG. 12 is a locally enlarged view of position E in FIG. 11. Referring to FIGs. 11 and 12, the sealing component 212 may specifically include a first sealing part 212a and a second sealing part 212b, where the first sealing part 212a abuts between the groove bottom of the groove section 2102 and the pressure relief component body 211a, and the second sealing part 212b is connected to the first sealing part 212a, and the second sealing part 212b abuts between the first protruding part 2103 and the pressure relief component body 211a.

In the implementation where part of the sealing component 212 abuts between the groove bottom of the groove section 2102 and the pressure relief component body 211a, the sealing component 212 may also have part abutting between the pressure relief component body 211a and the first protruding part 2103. Specifically, as shown in FIGs. 11 and 12, the sealing component 212 is designed to include the first sealing part 212a and the second sealing part 212b, where the first sealing part 212a is used to seal a gap between the groove bottom of the groove section 2102 and the pressure relief component body 211a, and the second sealing part 212b is used to seal a gap between the first protruding part 2103 and the pressure relief component body 211a.

The first sealing part 212a is located at the edge of the second sealing part 212b, and the first sealing part 212a protrudes toward the groove bottom of the groove section 2102 relative to the second sealing part 212b. In this example, the maximum dimension h5 of the sealing component 212 along the depth direction of the groove section 2102 is the dimension of the first sealing part 212a along the Z direction. It can be understood that since h5>h2, there is a space between the first protruding part 2103 and the pressure relief component body 211a, which can be used for the installation of the second sealing part 212b, and the difference between h5 and h2 is equal to the thickness of the second sealing part 212b along the Z direction, allowing the second sealing part 212b to contact both the first protruding part 2103 and the pressure relief component body 211a.

With this design, the sealing component 212 not only seals the gap between the groove bottom of the groove section 2102 and the pressure relief component body 211a but also seals the gap between the first protruding part 2103 and the pressure relief component body 211a, reducing the gas inside the battery cell 20 escaping from the gap between the first protruding part 2103 and the pressure relief component body 211a, further enhancing air tightness between the pressure relief component 211 and the end cover 210, facilitating the enhancement of the use safety of the battery cell 20 using the end cover assembly 21.

The second sealing part 212b has a second through-hole 2121 that communicates with the first through-hole 2104, the hole wall of the second through-hole 2121 forms the inner peripheral side surface of the second sealing part 212b, and the inner peripheral side surface of the second sealing part 212b protrudes toward the centerline of the second through-hole 2121 from the first protruding part 2103.

The second sealing part 212b is provided with the second through-hole 2121, and the second through-hole 2121 is in communication with the first through-hole 2104. Thus, even though the second sealing part 212b is located between the first protruding part 2103 and the pressure relief component body 211a, the second sealing part 212b does not block the first through-hole 2104. When the internal pressure of the battery cell 20 reaches a preset threshold, and the pressure relief component body 211a cracks along the notch groove 2111, the inside of the battery cell 20, the first through-hole 2104, the second through-hole 2121, and the inside of the groove section 2102 communicate sequentially to form an exhaust channel, allowing the internal gas of the battery cell 20 to flow out of the battery cell 20 from the exhaust channel, ensuring that the pressure relief component 211 can perform its pressure relief function. Not limited to the track shape shown in FIG. 10, the second through-hole 2121 may be also circular, square, elliptical, or of other gas shapes.

Moreover, the inner peripheral side surface of the hole wall of the second through-hole 2121 protrudes toward the centerline of the second through-hole 2121 from the first protruding part 2103, thus the orthographic projection of the second through-hole 2121 on the groove bottom of the groove section 2102 falls within the orthographic projection of the first through-hole 2104 on the groove bottom of the groove section 2102, that is, the opening area of the first through-hole 2104 is greater than the opening area of the second through-hole 2121. Specifically, taking the example where both the first through-hole 2104 and the second through-hole 2121 are circular holes, then the diameter of the second through-hole 2121 is smaller than the diameter of the first through-hole 2104. It is visible that part of the second sealing part 212b has its orthographic projection on the groove bottom of the groove section 2102 falling within the orthographic projection of the first through-hole 2104 on the groove bottom of the groove section 2102.

As the second sealing part 212b is designed to have its inner peripheral side surface protrude from the first protruding part 2103, the opening area of the second through-hole 2121 is less than the opening area of the first through-hole 2104, that is, the cross section of the exhaust channel changes. Thus, when the internal gas of the battery cell 20 flows from the first through-hole 2104 to the second through-hole 2121, the gas pressure further increases and the speed is increased at which the gas flows toward the pressure relief component body 211a, further ensuring that the gas can break through the pressure relief component body 211a, allowing the pressure relief component 211 to perform its pressure relief function.

Continuing to refer to FIGs. 10, 11, and 12, the end cover assembly 21 may also include a pressing component 213, where the pressing component 213 is disposed on an outer side of the pressure relief component 211 away from the groove bottom of the groove section 2102, and the pressing component 213 is connected to the end cover 210 to press the pressure relief component 211 between the pressing component 213 and the groove bottom of the groove section 2102.

It is visible that the pressing component 213 is located above the pressure relief component 211. Moreover, the pressing component 213 may be specifically configured to enable the first through-hole 2104 to communicate with the outside of the battery cell 20 when the pressure relief component body 211a cracks, such that when the internal pressure of the battery cell 20 reaches a preset threshold, the gas can be smoothly discharged through the first through-hole 2104.

Exemplarily, as shown in FIG. 10, the pressing component 213 may be an annular pressing ring. In some embodiments, the pressing component 213 may alternatively be other structures. For example, the pressing component 213 may include multiple pressing blocks, where multiple pressing blocks are arranged at intervals around the centerline of the first through-hole 2104, and the multiple pressing blocks are tightly connected to the end cover 210 and press on the pressure relief component body 211a. The pressing component 213 may also be arranged to surround the outside of the notch groove 2111 of the pressure relief component body 211a, thus the pressing component 213 can effectively avoid the location of the notch groove 2111, thereby effectively alleviating the impact of the pressing component 213 on the need for the pressure relief component body 211a to crack along the notch groove 2111 when the internal pressure of the battery cell 20 reaches a preset threshold.

With the design of the pressing component 213, the pressing component 213 presses on the pressure relief component 211, pressing the pressure relief component 211 between the pressing component 213 and the groove bottom of the groove section 2102, thereby facilitating the enhancement of the stability of the installation of the pressure relief component 211 in the end cover 210.

In the examples shown in FIGs. 11 and 12, the distance d between the top surface of the pressing component 213, facing away from the pressure relief component 211, and the groove bottom of the groove section 2102 is less than or equal to the depth H of the groove section 2102.

It is worth noting that in this embodiment, the distance h1 between the top surface of the pressure relief component 211, facing away from the inside of the battery cell 20, and the groove bottom of the groove section 2102 is less than the depth H of the groove section 2102, and h1 is also less than d. In one scenario, as shown in FIGs. 11 and 12, d may be equal to H. In this case, the top surface of the pressing component 213 can be flush with the top surface of the end cover 210. In another scenario, d may be less than H. In this case, the top surface of the pressing component 213 is closer to the groove bottom of the groove section 2102 than the top surface of the end cover 210. In other words, along the direction Z, the top surface of the pressing component 213 is lower than the top surface of the end cover 210.

In summary, as the distance d between the top surface of the pressing component 213, facing away from the pressure relief component 211, and the groove bottom of the groove section 2102 is designed to be less than or equal to the depth H of the groove section 2102, the top surface of the pressing component 213 does not protrude from the top surface of the end cover 210.

Thus, when the battery cell 20 uses the end cover assembly 21 of this embodiment, with the pressing component 213 pressing the pressure relief component 211, the pressing component 213 of the battery cell 20 does not protrude from the top surface of the end cover 210, thus the pressing component 213 does not occupy additional space of the battery cell 20 in the height direction. In this way, compared to the related technology where the pressure relief component 211 protrudes from the top surface of the end cover 210, without changing the total height of the battery cell 20, the internal space of the battery cell 20 using the end cover assembly 21 of this embodiment is larger, increasing the number of electrode plates that can be accommodated inside the battery cell 20 and the capacity of active materials of the battery cell 20, thus increasing the energy density of the battery cell 20.

In one feasible manner, the pressing component 213 and the end cover 210 may be made of the same material. For example, when the end cover 210 is made of steel, the pressing component 213 is correspondingly made of steel. Alternatively, when the end cover 210 is made of titanium alloy, the pressing component 213 is correspondingly made of titanium alloy. Certainly, in other embodiments, both the end cover 210 and the pressing component 213 may alternatively be made of iron or other metal materials.

As the material of the pressing component 213 is designed to be the same as the material of the end cover 210, the pressing component 213 and the end cover 210 made of the same metal can be welded together using a solder 216, thereby effectively enhancing the connection strength between the pressing component 213 and the end cover 210, facilitating the enhancement of the overall structural strength of the end cover assembly 21. Specifically, laser welding can be used to connect the pressing component 213 to the end cover 210.

Continuing to refer to FIGs. 10 to 12, the end cover assembly 21 also includes an insulating component 214, where at least part of the insulating component 214 is disposed between the pressing component 213 and the pressure relief component 211, to insulate and isolate the pressing component 213 from the pressure relief component 211.

. The pressing component 213 and the pressure relief component 211 are insulated and isolated. To be specific, setting the insulating component 214 between the pressure relief component 211 and the pressing component 213 achieves no electrical conduction between the pressure relief component 211 and the pressing component 213, where at least part of the insulating component 214 is disposed between the pressing component 213 and the pressure relief component 211. This should be understood in a broad sense. That is, it can be understood that the insulating component 214 is entirely disposed between the pressing component 213 and the pressure relief component 211, to insulate and isolate the pressing component 213 from the pressure relief component 211, or that only part of the insulating component 214 is disposed between the pressing component 213 and the pressure relief component 211.

Exemplarily, the material of the insulating component 214 can be rubber, or it can be plastic, when the insulating component 214 is plastic, it can specifically be polyethylene terephthalate (PET), polypropylene (PP), polycarbonate (PC), or polyvinyl chloride (PVC), etc.

At least part of the insulating component 214 is disposed between the pressure relief component 211 and the pressing component 213, to achieve insulation and isolation between the pressure relief component 211 and the pressing component 213. That is, the insulating component 214 can electrically insulate the pressure relief component 211 from the pressing component 213, reducing current conduction between the pressure relief component 211 and the pressing component 213. This is conducive to prolonging the service life of the pressure relief component 211 and enhancing the use safety of the battery cell 20 including this type of end cover assembly 21, thus avoiding a short circuit in the battery cell 20.

In some embodiments of this application, as shown in FIGs. 11 and 12, the insulating component 214 can include a first insulating part 214a and a second insulating part 214b that are sequentially connected, where the first insulating part 214a is set between part of the top surface of the pressure relief component 211 and the pressing component 213, and the second insulating part 214b covers the outer peripheral side surface of the pressure relief component 211.

It can be understood that the first insulating part 214a abuts against part of the top surface of the pressure relief component body 211a and part of the pressing component 213, the second insulating part 214b is set at the edge of the first insulating part 214a, the second insulating part 214b contacts the outer peripheral side surface of the second protruding part 211b, to insulate the contact between the second protruding part 211b and the inner peripheral side surface of the groove section 2102.

As the insulating component 214 is designed to include the first insulating part 214a and the second insulating part 214b, the first insulating part 214a is used to achieve insulation and isolation between the pressure relief component body 211a and the pressing component 213, and the second insulating part 214b is used to achieve insulation and isolation between the pressure relief component 211 and the connecting part 2102b of the groove section 2102 (refer to the description below). In summary, the insulating component 214 insulates the pressure relief component 211 from the pressing component 213 and from the connecting part 2102b of the groove section 2102, reducing current conduction between the pressure relief component 211 and the pressing component 213 as well as the groove section 2102, to reduce the risk of a short circuit. This is conducive to prolonging the service life of the pressure relief component 211 and enhancing the use safety of the battery cell 20 including this type of end cover assembly 21.

Specifically, reference can be made to FIGs. 11 and 12, the end cover assembly 21 also includes an isolation component 215, where the isolation component 215 is disposed between the pressure relief component 211 and the groove bottom of the groove section 2102, to insulate and isolate the pressure relief component 211 from the groove bottom.

Disposing the isolation component 215 between the pressure relief component 211 and the groove bottom of the groove section 2102 can achieve no electrical conduction between the pressure relief component 211 and the bearing part 2102a (refer to the description below) of the groove section 2102. For example, the isolation component 215 may be specifically disposed on the groove bottom of the groove section 2102, to isolate the groove bottom of the groove section 2102 from the pressure relief component 211.

Similar to the insulating component 214, the material of the isolation component 215 may also be rubber or plastic. In an implementation where the isolation component 215 is plastic, the material of the isolation component 215 may specifically be polyethylene terephthalate (PET), polypropylene (PP), polycarbonate (PC), or polyvinyl chloride (PVC), or the like.

The isolation component 215 can isolate the pressure relief component 211 from the bearing part 2102a of the groove section 2102 for electrical insulation between the pressure relief component 211 and the bearing part 2102a of the groove section 2102, reducing current conduction between the pressure relief component 211 and the groove section 2102. This is conducive to prolonging the service life of the pressure relief component 211 and enhancing the use safety of the battery cell 20 including this type of end cover assembly 21.

The isolation component 215 is connected to the second insulating part 214b, and the isolation component 215 covers part of the bottom surface of the pressure relief component 211 facing the groove bottom of the groove section 2102.

In addition to being disposed on the groove bottom of the groove section 2102 as described above, the isolation component 215 may be connected to the second insulating part 214b in the example shown in FIG. 12, forming an integral part with the insulating component 214. Specifically, as shown in FIG. 12, when the end cover assembly 21 includes a sealing component 212, the isolation component 215 correspondingly covers the bottom surface of the second protruding part 211b facing the groove bottom of the groove section 2102. When the end cover assembly 21 does not include a sealing component 212, the isolation component 215 is configured to have a part covering the bottom surface of the second protruding part 211b and another part covering the surface of the pressure relief component body 211a facing the groove bottom of the groove section 2102.

As the isolation component 215 is designed to be connected to the second insulating part 214b, the isolation component 215 and the insulating component 214 form an integral part, completely insulating and isolating the pressure relief component 211 from the groove section 2102.

Based on the implementation where the isolation component 215 is connected to the second insulating part 214b, the isolation component 215 may further form an integral part with the insulating component 214 through the one-piece molding process.

In other words, the first insulating part 214a, the second insulating part 214b, and the isolation component 215 are an integral part, where the isolation component 215 is equivalent to part of the insulating component 214. In this example, the material of the isolation component 215 is the same as the material of the insulating component 214.

The isolation component 215 and the insulating component 214 form an integral part, which can not only eliminate the assembly process of the isolation component 215 and the insulating component 214, facilitating improvement of the assembly efficiency of the end cover assembly 21, but also effectively enhance the structural strength of the insulating component 214 without increasing costs.

FIG. 13 is a partial sectional schematic diagram of still yet another end cover assembly 21 provided by the embodiments of this application. As an alternative embodiment, referring to FIG. 13, the end cover assembly 21 further includes a sealing component 212, where the sealing component 212 abuts between the groove bottom of the groove section 2102 and the pressure relief component 211, and the isolation component 215 is tightly connected to the sealing component 212.

In other words, when the end cover assembly 21 is provided with a sealing component 212, the isolation component 215 may be also connected to the sealing component 212, and the isolation component 215 and the sealing component 212 form an integral part. In this case, the isolation component 215 can be considered as part of the sealing component 212. To be specific, in the implementation where part of the sealing component 212 abuts between the groove bottom of the groove section 2102 and the pressure relief component body 211a, the sealing component 212 may also have part disposed between the second protruding part 211b and the groove bottom of the groove section 2102.

In this example, the material of the isolation component 215 may be the same as the material of the sealing component 212, allowing the isolation component 215 and the sealing component 212 to form an integral part through a one-piece molding process. Thus, there is no need to install the isolation component 215 separately; once the sealing component 212 is installed to the groove section 2102, the isolation component 215 is also installed in place, facilitating the improvement of assembly efficiency.

Thus, the isolation component 215 and the sealing component 212 form an integral part, and the isolation component 215 is equivalent to part of the sealing component 212, making the sealing component 212 have not only a sealing function but also a function of insulating and isolating the pressure relief component 211 from the groove bottom of the groove section 2102. It should also be noted that in the example shown in FIG. 12, during assembly of the end cover assembly 21, it is necessary to apply force to deform the insulating component 214 for installing the pressure relief component 211 inside the insulating component 214. In this embodiment, since the isolation component 215 is connected to the sealing component 212, the insulating component 214 is easily installed on the pressure relief component 211, facilitating installation.

Refer to FIGs. 12 and 13, the isolation component 215 abuts against a surface of the pressure relief component 211 facing the groove bottom of the groove section 2102, and the isolation component 215 has a second gap D2 with the groove bottom of the groove section 2102.

In other words, the isolation component 215 contacts only a surface of the pressure relief component 211 facing the groove bottom of the groove section 2102, and does not contact the groove bottom of the groove section 2102. It is visible that the thickness d of the isolation component 215 along the Z direction is less than the dimension (that is, the second dimension) h3 between the second protruding part 211b and the groove bottom of the groove section 2102.

With such arrangement, in the implementation where the isolation component 215 is connected to the second insulating part 214b of the insulating component 214, the second gap D2 provides an assembly gap for the installation of the isolation component 215, facilitating easy installation of the insulating component 214 on the pressure relief component 211.

The end cover 210 includes an end cover body 2101, the groove section 2102 includes a bearing part 2102a and a connecting part 2102b, a surface of the bearing part 2102a facing the outside of the battery cell 20 forms the groove bottom of the groove section 2102, the connecting part 2102b is arranged around the bearing part 2102a, and the bearing part 2102a is connected to the end cover body 2101 through the connecting part 2102b.

Thus, in some embodiments, the groove section 2102 and the end cover body 2101 can be designed as two independent components, where the end cover 210 is a separately configured part.

The end cover body 2101, the connecting part 2102b, and the bearing part 2102a are formed as an integral part by a one-piece molding process. That is, the entire end cover 210 can be considered as an integral part, where the groove section 2102 can be formed using a stamping process. This design eliminates the assembly process of the groove section 2102 and the end cover body 2101, enhancing the assembly efficiency, and, enhances the structural strength of the end cover 210 without increasing costs.

In the above embodiments, the material constituting the pressure relief component 211 may include aluminum, and the material constituting the end cover 210 may include steel. For example, the material of the pressure relief component 211 may be aluminum or aluminum alloy, and the material of the end cover 210 may be steel or steel alloy. The structural strength of steel is higher than that of aluminum, thus the hardness of the pressure relief component 211 is less than the hardness of the end cover 210.

As the end cover 210 is made of steel and the pressure relief component 211 is made of aluminum, the steel end cover 210 has high-temperature resistance characteristics. This is conducive to reducing the risk of high-temperature melting caused by explosions due to short circuits or overcharging phenomena in the battery cell 20, alleviating the problem of high-temperature melting of the battery cell 20. In addition, the aluminum pressure relief component 211 has low hardness, facilitating the processing to form the notch groove 2111, and since the hardness of the end cover 210 is greater than the hardness of the pressure relief component 211, when the internal pressure of the battery cell 20 increases, the internal gas of the battery cell 20 preferentially impacts the pressure relief component 211 with lower hardness, allowing the pressure relief component 211 to perform its pressure relief function, thereby facilitating the controllable exhaust direction of the battery cell 20.

In a specific embodiment, as shown in FIG. 12, the end cover assembly 21 may include the end cover 210, the pressure relief component 211, the sealing component 212, the insulating component 214, the pressing component 213, and the isolation component 215. The end cover 210 is provided with a recessed groove section 2102 recessed toward the inside of the battery cell 20, the groove bottom of the groove section 2102 is provided with a first through-hole 2104, the first through-hole 2104 is provided with a first protruding part 2103 at an edge; the pressure relief component 211 is installed within the groove section 2102, the pressure relief component 211 includes a pressure relief component body 211a and a second protruding part 211b set at an edge of the pressure relief component body 211a, the pressure relief component body 211a covers the first through-hole 2104, the second protruding part 211b protrudes toward the groove bottom of the groove section 2102; the sealing component 212 includes a first sealing part 212a and a second sealing part 212b, the first sealing part 212a abuts between the first protruding part 2103 and the pressure relief component body 211a, the second sealing part 212b abuts between the groove bottom of the groove section 2102 and the pressure relief component body 211a. Moreover, the second protruding part 211b abuts against the outer peripheral side surface of the first sealing part 212a, the second sealing part 212b has a first gap with the outer peripheral side surface of the first protruding part 2103. The second sealing part 212b is provided with a through-hole communicating with the first through-hole 2104.

The above pressing component 213 is located within the groove section 2102, and the pressing component 213 is located above the pressure relief component 211. The insulating component 214 includes connected first insulating part 214a and second insulating part 214b, the first insulating part 214a abuts between the pressure relief component 211 and the pressing component 213, the second insulating part 214b covers the outer peripheral side surface of the pressure relief component 211, the isolation component 215 is connected to the second insulating part 214b and covers part of the bottom surface of the second protruding part 211b facing the groove bottom, the isolation component 215 also has a second gap D2 with the groove bottom of the groove section 2102.

The top surface of the pressing component 213 facing away from the pressure relief component 211, has a distance d to the groove bottom of the groove section 2102 equal to the depth H of the groove section 2102, and the dimension h2 by which the first protruding part 2103 protrudes from the groove bottom is greater than the dimension h3 between the second protruding part 211b and the groove bottom of the groove section 2102. Moreover, the maximum dimension of the sealing component 212 along the depth direction of the groove section 2102 is a third dimension h5, which is also greater than the dimension by which the first protruding part 2103 protrudes from the groove bottom.

In conclusion, it should be noted that the above embodiments are merely intended for describing the technical solutions of this application but not for limiting this application. Although this application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this application. They should all be covered in the scope of the claims and specification of this application. In particular, as long as there is no structural conflict, the various technical features mentioned in some embodiments can be combined in any manner. This application is not limited to the specific embodiments disclosed in this specification but includes all technical solutions falling within the scope of the claims.

## Claims

1. An end cover assembly for a battery cell, comprising:
an end cover, wherein the end cover is provided with a recessed groove section recessed toward an inside of the battery cell, the groove section is provided with a first through-hole at a groove bottom thereof, the first through-hole is provided with a first protruding part at an edge thereof, and the first protruding part protrudes from the groove bottom in a direction away from the inside of the battery cell; and
a pressure relief component, wherein: the pressure relief component is disposed within the groove section, and a top surface of the pressure relief component, facing away from the inside of the battery cell, has a distance to the groove bottom of the groove section that is less than or equal to a depth of the groove section; and the pressure relief component comprises a pressure relief component body covering the first through-hole and a second protruding part connected to an edge of the pressure relief component body, wherein the second protruding part protrudes toward the groove bottom from the pressure relief component body, and the second protruding part is located between the first protruding part and an inner peripheral side surface of the groove section.

2. The end cover assembly according to claim 1, wherein
a dimension by which the first protruding part protrudes from the groove bottom is a first dimension, and a dimension between the second protruding part and the groove bottom is a second dimension, the first dimension being greater than the second dimension.

3. The end cover assembly according to claim 2, wherein
a difference between the first dimension and the second dimension is greater than 0 mm and less than or equal to 0.8 times the first dimension, or the difference between the first dimension and the second dimension is greater than 0 mm and less than or equal to 2 mm.

4. The end cover assembly according to any one of claims 1 to 3, further comprising:
a sealing component, wherein at least part of the sealing component abuts between the groove bottom and the pressure relief component body to seal the pressure relief component body and part of the end cover constituting the groove section.

5. The end cover assembly according to claim 4, wherein the second protruding part abuts against an outer peripheral side surface of the sealing component.

6. The end cover assembly according to claim 4 or 5, wherein at least part of the sealing component is located between the first protruding part and the second protruding part, and the at least part of the sealing component has a first gap with the first protruding part in a direction parallel to the groove bottom.

7. The end cover assembly according to any one of claims 4 to 6, wherein
a maximum dimension of the sealing component along a depth direction of the groove section is a third dimension, wherein the third dimension is greater than a dimension by which the second protruding part protrudes from the pressure relief component body, and the third dimension is also greater than a dimension by which the first protruding part protrudes from the groove bottom.

8. The end cover assembly according to any one of claims 4 to 7, wherein the sealing component comprises:
a first sealing part, abutting between the groove bottom and the pressure relief component body, and
a second sealing part connected to the first sealing part, wherein the second sealing part abuts between the first protruding part and the pressure relief component body.

9. The end cover assembly according to claim 8, wherein the second sealing part comprises a second through-hole that communicates with the first through-hole, a hole wall of the second through-hole forms an inner peripheral side surface of the second sealing part, and the inner peripheral side surface of the second sealing part protrudes toward a centerline of the second through-hole from the first protruding part.

10. The end cover assembly according to any one of claims 1 to 9, further comprising a pressing component,
wherein the pressing component is disposed on an outer side of the pressure relief component away from the groove bottom, and the pressing component is connected to the end cover to press the pressure relief component between the pressing component and the groove bottom.

11. The end cover assembly according to claim 10, wherein
a distance from a top surface of the pressing component, facing away from the pressure relief component, to the groove bottom is less than or equal to the depth of the groove section.

12. The end cover assembly according to claim 10 or 11, wherein the pressing component and the end cover are made of a same material.

13. The end cover assembly according to any one of claims 10 to 12, further comprising an insulating component,
wherein at least part of the insulating component is disposed between the pressing component and the pressure relief component to insulate and isolate the pressing component from the pressure relief component.

14. The end cover assembly according to claim 13, wherein
the insulating component comprises a first insulating part and a second insulating part that are sequentially connected, wherein the first insulating part is disposed between part of the top surface of the pressure relief component and the pressing component, and the second insulating part covers an outer peripheral side surface of the pressure relief component.

15. The end cover assembly according to claim 14, further comprising an isolation component, wherein the isolation component is disposed between the pressure relief component and the groove bottom to insulate and isolate the pressure relief component from the groove bottom.

16. The end cover assembly according to claim 15, wherein the isolation component is connected to the second insulating part, and the isolation component covers part of a bottom surface of the pressure relief component facing the groove bottom.

17. The end cover assembly according to claim 16, wherein the isolation component and the insulating component are formed as an integral part by a one-piece molding process.

18. The end cover assembly according to claim 15, further comprising a sealing component, wherein the sealing component abuts between the groove bottom and the pressure relief component, and the isolation component is tightly connected to the sealing component.

19. The end cover assembly according to any one of claims 15 to 18, wherein
the isolation component abuts against a surface of the pressure relief component facing the groove bottom, and the isolation component has a second gap with the groove bottom.

20. The end cover assembly according to any one of claims 1 to 19, wherein
the end cover comprises an end cover body, and
the groove section comprises a bearing part and a connecting part, wherein a surface of the bearing part facing an outside of the battery cell forms the groove bottom, the connecting part is arranged around the bearing part, and the bearing part is connected to the end cover body through the connecting part.

21. The end cover assembly according to claim 20, wherein
the end cover body, the connecting part, and the bearing part are formed as an integral part by a one-piece molding process.

22. The end cover assembly according to any one of claims 1 to 21, wherein
a material constituting the pressure relief component comprises aluminum, and a material constituting the end cover comprises steel.

23. A battery cell, comprising:
an electrode assembly,
a housing, wherein the housing has an opening, and the electrode assembly is accommodated within the housing; and
the end cover assembly according to any one of claims 1 to 22, wherein the end cover assembly covers the opening.

24. A battery, comprising the battery cell according to claim 23.

25. An electric apparatus, comprising the battery according to claim 24.
